# EUROPEAN PATENT APPLICATION

(11) **EP 1 509 029 A1**
(43) Date of publication of application: **23.02.2005**
(21) Application number: 03292055.5
(22) Date of filing: 20.08.2003
(51) Int. Cl.: H04M 3/22

(54) **Operation and maintenance center wizard**

(71) Applicant: Evolium S.A.S., 75008 Paris (FR)
(72) Inventor: Durand, Anne, 91620 La Ville du Bois (FR)
(74) Representative: Brose, Gerhard

(57) **Abstract**

The invention relates to an Operation and Maintenance Center (OMC) for the operation and maintenance management of an Operators telecommunications network, comprising display, input and communication means, the means intended for an operator to view information related to the telecommunications network elements under his management scope, to introduce command actions following a determined business process, and to communicate said actions to the network elements or receive status information from them and to further guide or assist the operator through the steps to complete the business processes.

It also relates to a method for managing a telecommunications network using an Operation and Maintenance Center (OMC) as described above, and to an Operation and Maintenance Center wizard to help and assist the operator in his management tasks.

## Description

The present invention relates to the field of Telecommunications Management Networks, and more specifically to a method for providing assistance to an operator of an Operation and Maintenance Center (OMC).

The purpose of a Telecommunications Management Network is to support the management requirements of the telecommunications operators to plan, provision, install, maintain, operate and administer telecommunications networks and services. An Operation and Maintenance Center is known as a part of the Telecommunication Management Network which provides dynamic monitoring and control of operation and maintenance of the telecommunications network elements operating in a given geographical area.

The OMC provides a framework through which a plurality of management functional tasks can be executed; Configuration Management, Fault Management, Performance Management, Accounting Management and Security Management are some of the functions which can be provided to the operator to support the management of his telecommunications network. Configuration Management, for example, defines a number of services which enable the structure, and thus the characteristics of a communications network to be changed by the operator. Provision is also made for access to, and display of, the management information contained within the Telecommunications Management Network to operator staff.

The operation and maintenance of a telecommunications network can be managed from a workstation of an OMC known as an Operation and Maintenance Terminal (OMT). Within the scope of a Configuration Management, for example, a number of operators of the OMC, which are working independently of one another in any of the OMTs, can simultaneously change the configuration of a communications network by executing a number of configuration processes. A configuration process is usually initiated with a "start configuration" command which is issued manually by the operator and, in the normal case, it is concluded with an "end configuration" command when all changes in configuration are entered.

In order to know which steps the operator of the OMC shall perform to complete a process, a business process which details said necessary steps is defined, for example a business process for the configuration or modification of cell parameters in an OMC. All these practices are well known for those skilled in the art.

But a major problem with this approach is that the operator has no guidance or control to help him follow the right steps in the right order. The business process does not always concern just one application and if he is not guided he may not know in which application an operation needs to be performed and the correct order of operations.

In US Pat. 6,307,925 a software in the form of a wizard or expert in a telecommunications environment which assists the system user in a variety of ways is disclosed. A computer implemented method for providing assistance to a customer of a computer application which allows a customer to perform maintenance functions on a telecommunication system or analize telecommunication needs. Such telecommunication system is a digital telephone, a telephone conference switch or a telecommunication switch.

Nowdays there is a lack of a functionality which greatly simplifies performing OMC operations. There is no knowledge of a Graphical User Interface (GUI) wizard in an OMC environment, so such a tool would be helpful to guide the operator to follow the right steps in the right order.

The object of the invention is to overcome the above listed problems of the current state of the art Operation and Maintenance Centers by the development of an Operation and Maintenance Center in which the operator is guided through the business processes he shall perform by means of an OMC wizard application.

The object is achieved according to the invention by an Operation and Maintenance Center (OMC) for the operation and maintenance management of an Operators telecommunications network, comprising display, input and communication means, said means intended for an operator to view information related to the telecommunications network elements under his management scope, to introduce command actions following a determined business process, and to communicate said actions to the network elements or receive status information from them, wherein it further comprises means to guide or assist the operator through the steps to complete the business processes.

The object is also achieved by a method for managing a telecommunications network by means of a Telecommunication Management Network (TMN) which comprises at least one OMC in which operation and maintenance commands are entered by an operator following a determined business process to actuate on network elements of said telecommunications network, wherein said operator is provided with means to guide or assist him through the steps to complete the business processes.

The object is also achieved by an Operation and Maintenance Center wizard which comprises display window means intended to guide and assist an operator of a telecommunications network.

The invention described here will help operators to reduce their exploitation cost which nowadays is an important criteria at the operator product choice step. The telecommunications network deployment and exploitation Operator staff is provided with a tool to assist them to perform all the operations necessary for the completion of a business process, thus the management of the network is more straightforward and the learning cycle for new team members, which are unfamiliar with the business processes, is shorter.

Advantageous configurations of the invention emerge from the dependent claims, the following description and the drawings.

An embodiment example of the invention is now explained with the aid of Figures 1 to 3.

Figure 1 shows a block diagram of a Telecommunications Management Network comprising an Operation and Management Center according to the invention.

Figure 2 shows an Operations and Maintenance Center according to the invention.

Figure 3 shows a possible realization of an OMC wizard according to the invention.

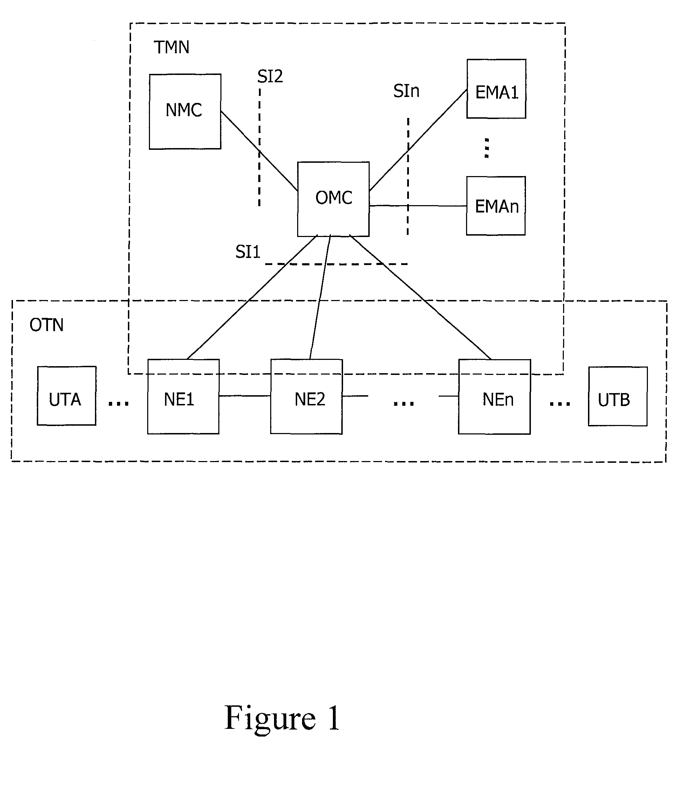

Figure 1 shows a Telecommunications Management Network TMN which is intended to support the management of an Operator Telecommunications Network OTN. In the Telecommunications Management Network TMN embodiment example, an Operator and Maintenance Center OMC is connected via standardized interfaces SI1 to SIn to a plurality of external management elements such as a Network Maintenance Center NMC and other External Management Applications EMA1 to EMAn and to the network elements NE1 to NEn of the Operator Telecommunications Network OTN which are under management scope. The Operator Telecommunication Network OTN consists of many types of analogue and digital telecommunications equipment and associated support equipment; this comprises typically user terminal equipment UTA, UTB which is interconnected via a plurality of operator transmission systems, switching systems, multiplexes, signalling terminals, servers, etc., which when managed, such equipment is generally referred to as Network Elements NE1 to NEn.

In order to integrate the Operation and Management Center OMC into the network management environment of the telecommunications operator, the Operation and Maintenance Center OMC provides a set of open interfaces SI1 to SIn enabling external management application tools to access the data it manages and/or transmit specific O&M network command actions. Examples of such potential multivendor external applications are the Network Management Centers NMC which provide global and centralised monitoring and control by being at the top of the maintenance hierarchy; the Radio Network Optimization applications which provide specific services to the operator to increase the performance of its mobile communications network; or Quality of Service (QoS) reporting applications.

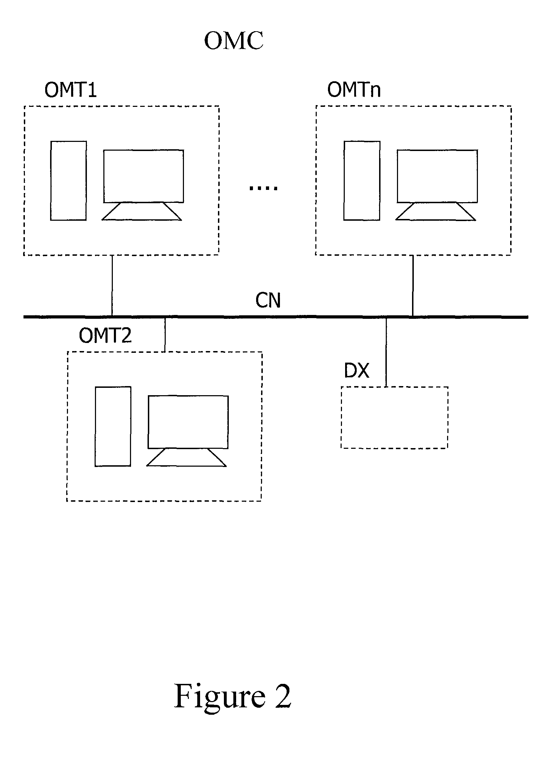

Figure 2 shows an Operation and Maintenance Center. In the shown embodiment example, the Operation and Maintenance Center comprises a plurality of Operation and Maintenance Terminals OMT1 to OMTn and other devices DX which are connected via a communications network CN, such as an IP network.

The Operation and Maintenance Terminals OMT1 to OMTn can be commonly used IT equipment such as workstations or personal computers and may be organized and work in a client-server manner. For example, the management applications of the Operation and Maintenance Center can be hosted on a server and the operator staff user interfaces can be hosted on the clients. All of them may be connected via an IP network. Other devices DX which may be connected to the communications network CN are for example printer devices, external communication devices, specific-purpose database servers, etc.

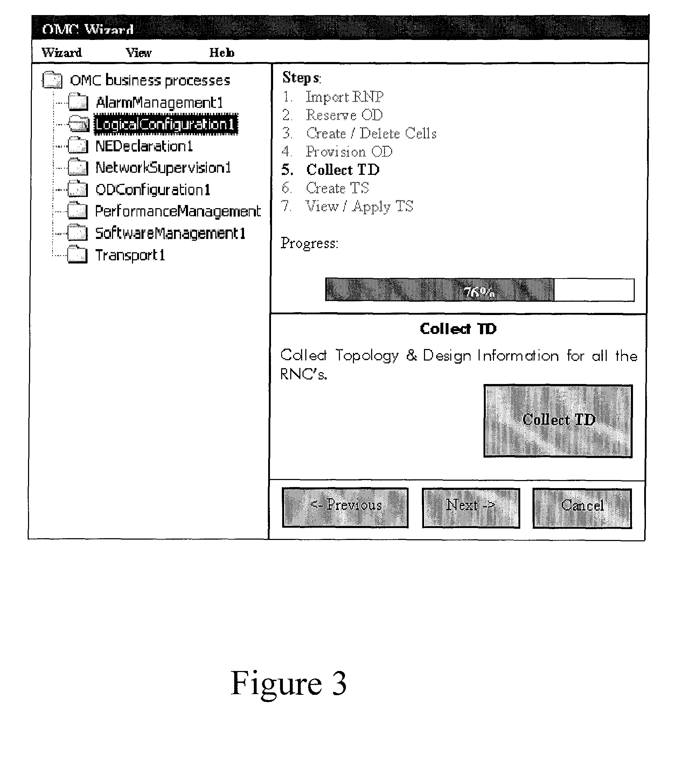

Figure 3 shows what the OMC wizard tool could look like in an OMT.

The OMTs of the OMC would provide display, input and communication means so that the operator staff can view information and execute operation and maintenance command actions for the management tasks under their scope.

Also, according to the present invention, the operator staff can at any moment execute the OMC wizard in the OMT so that he can be guided. As seen in the figure, the wizard displays a set of OMC business processes from which the operator may choose. In the example of the figure, the operator selects the Logical Configuration business process whose steps are then detailed on the display wizard window and can be selected by him. Each step of the business process involves the introduction by the operator of a management command or a plurality of them, or, in an alternative implementation of the wizard, said commands my be executed automatically when selecting each step. In the figure, the operator is performing step 5 Collect Topology & Design Information for all the RNCs. In order to let the operator know the progress made at every business process step and indication is also displayed. Previous and Next wizard buttons may take the user to the necessary steps or alternatively the user selects them directly by means of a mouse cursor, that is, from the example in Figure 3, the operator is able to select any of the steps 1 through 7 of the Logical Configuration business process, such as step 3 "Create / Delete Cells".

Of course, as explained for the Logical Configuration business process, the operator would also be able to select the Alarm Management business process or any other of the OMC business processes available and carry out the necessary steps being guided by the wizard.

The operator is also allowed to stop the business process, save the wizard application and restart it at any time to retake his management operations. The wizard will show the user what was the status of business process at the closing of the previous session.

The input needed from the user is collected on the wizard screen. The OMC wizard accomplishes this by asking each server for the information needed to show the user so that he may take his choice.

In another implementation of the invention , not shown here, the operator is able to create a business process for any OMC management function he may need to manage.

## Claims

1. An Operation and Maintenance Center (OMC) for the operation and maintenance management of an Operators telecommunications network, comprising display, input and communication means, said means intended for an operator to view information related to the telecommunications network elements under his management scope, to introduce command actions following a determined business process, and to communicate said actions to the network elements or receive status information from them **characterized in that** it further comprises means to guide or assist the operator through the steps to complete the business processes.

2. The Operation and Maintenance Center according to claim 1 **characterized in that** it comprises means intended to create a wizard for assistance through the business processes for any OMC management function.

3. The Operation and Maintenance Center according to claim 1 **characterized in that** it comprises means intended to display the progress achieved in said business process.

4. A method for managing a telecommunications network by means of a Telecommunications Management Network (TMN) which comprises at least one OMC in which operation and maintenance commands are entered by an operator following a determined business process to actuate on network elements of said telecommunications network **characterized in that** said operator is provided with means to guide or assist him through the steps to complete the business processes.

5. The method for managing a telecommunications network according to claim 4 **characterized in that** said provision of guidance and assistance is done by:
selecting on a wizard window a business process to be performed,
displaying on said window the list of sub-operations needed to carry out said business process, said sub-operations addressing several applications running on the OMC,
displaying on said window the progress achieved on completion of said business process.

6. An Operation and Maintenance Center wizard which comprises control, communication and display window means, said means intended
to detect operators input for selection of a business process,
to display information to the operator about the OMC business processes available and the steps he shall perform to carry out said business processes, and to indicate him in which business process he is and the progress achieved,
to interact with another applications of the OMC to receive status information from them or communicate them selections from the operator.
